# EUROPEAN PATENT SPECIFICATION

(11) **EP 0 667 224 B1**
(45) Date of publication and mention of the grant of the patent: **21.10.1998**
(21) Application number: 95101267.3
(22) Date of filing: 31.01.1995
(51) Int. Cl.: B29C 49/28

(54) **Modular plant for continuous blow moulding of thermoplastic preforms and method for advancing these preforms**
Modulare Anlage zum kontinuierlichen Blasformen von thermoplastischen Vorformlingen und Verfahren zum Zuführen dieser Vorformlinge
Installation modulaire pour soufflage en continu de préformes en matières thermoplastiques et procédé pour alimenter et avancer ces préformes

(30) Priority: 11.02.1994 IT TV940012
(43) Date of publication of application: 16.08.1995
(73) Proprietor: S.I.A.P.I. S.R.L. Società d'Ingegneria e Automazione di Processi Industriali, 31020 S. Vendemiano, (TV) (IT)
(72) Inventor: Andreon, Elio, I-31020 S. Vendemiano (TV) (IT)
(74) Representative: D'Agostini, Giovanni, Dr.

(56) References cited:
- EP-A- 0 060 521
- EP-A- 0 173 818
- GB-A- 2 097 322

## Description

This invention has for object a modular plant, particularly for continuous blowing processes for shaping containers in plastic material, and method of advancing the preforms.

The innovation finds particular if not exclusive application in the sector of plants for the production of bottles in polyethylene terephtalate, used for bottling liquids for alimentary use.

In the present state of the art various blowing plants for containers in plastic material are known and technologically evolved. These are essentially subdivided into two categories, on the one hand processes which directly provide the shaping of the bottle, on the other hand processes which first provide the realization of a said preform, and then in a subsequent phase, if necessary, proceed to shaping the bottle.

This invention is directed to the latter category because it presents evident advantages such as a greater flexibility of the plant and convenient capacity of management of the stock in storage, according to which only the necessary amount is withdrawn and each time formed. The main concept on which the technique of blowing the preforms is based is more or less common to all plants. The preforms, following a predetermined path, are first of all heated until softening and then are introduced into a mould in which by blowing compressed air one will determine the expansion of the preforms up to the completion of the form obtained from the negative mould.

Traditionally a continuous line of blowing consists of, respectively from top to bottom, a loading station, in which some of the preforms, are each time withdrawn and transferred onto moving plates, to be overturned and then made to advance, through a heating tunnel. The preforms are put on the moving plates, which are nothing else than clamping means of the mouth of the preforms able to carry out a rotation by means of single movement, in order to allow the uniform and progressive heating of the whole surface. The moving plates, proceeding downwards, therefore transfer the preforms to a subsequent blowing station, comprising a mould and counter-mould, and after having been formed they are extracted and sent to the subsequent storing and/or bottling cycles.

However this plant, although it is reliable, has a few drawbacks, which can be summarized in the remarkable complexity of the equipment deriving from the necessity to overturn the preforms. Moreover, the typical step by step advancement requires besides maximum precision in the realization of moving plates also the adoption of four synchronized pushers, rendering the equipment much more complex. Other drawbacks is the movement applied to the single moving plates, which is particularly complicated and needs continuous maintenance. Finally, the adoption of a large-sized oleodynamic cylinder with direct action for the closure of the moulds in the blowing station, besides long moving action, leads to an oversize of the equipment.

The above drawbacks have recently been easily solved, by means of an Italian patent application having for object a machine for the production of containers in plastic material, comprising a preform loading station, a preform transfer means to transfer through a heating oven, and a mould for the blowing, characterized in that the preform transfer means substantially consists of a continuous chain, to whose meshes at equal distance preform support plates are applied, said plates having the collar turned upwards, said chain extending for a certain amount on the inside of the oven of the type comprising a ventilation system for suction and a cooling system for said collar, to cross in a later phase a blowing station consisting of a mould with mobile jaws (IT-A-1221267).

But this solution, too, has some drawbacks that this invention proposes to solve easily. A first problem, common to all the apparatuses is that the distance between a preform supported by the correspondent plate and an adjacent preform of a series, is fixed. Therefore it is obvious that the user has no real and immediate possibility to vary the distance between the same. As a result, there would be no other possibility left than the realization of a parallel plant with a distance different to the first. The drawbacks show up at once, for example the lack of the necessary versatility prevents the treatment at the same time of containers having different capacity. Moreover, a second line requires adequate space, and in any case means extra costs for the firm. The hypothesis mentioned is probably not one of the most frequent, but the variation of the distance and also of the speed are essential conditions for the optimization of the productive process also as far as costs are concerned.

One of the reasons that prevent the realization of convenient means able to correct the distance in the common apparatuses is that the transmission organs of the rotatory motion of any single plate, as well as the longitudinal moving chain, are extremely complex mechanisms which are cumbersome for the structure of the plant. This complexity affects the whole line, which may endanger the flexibility of the plant so that it is definitively limited to the technical quantity and productive quality characteristics originally conferred to it by the constructor.

Another drawback is that the known plants have the intermittent transportation system which is by all means optimal as for the preform loading station, the blowing mould supply and the discharge of containers, but it shows severe drawbacks during the transfer of the preforms in the heating section, not obtaining a constant and uniform distribution of the temperature, and as a result having a negative slowing effect downstream and making non-uniform the structural deformation of the preforms in the bottle moulding process.

The scope of the present invention is also to obviate the above-mentioned drawbacks.

This and other scopes are reached by the present invention according to the characteristics of the enclosed claims solving the exposed problems by means of a modular plant, particularly for continuous blowing processes for shaping containers in plastic material, and method for advancing the preforms, comprising from upstream to downstream a loading station, in which preforms are taken and transferred on plates to be carried through the heating of said preforms, then put into a blowing station and successively taken out, in which a continuous bottle shaping line is expandable being subdivided by modules; the modules are:
- a preform loading and container discharge module,
- at least one module for heating the preforms at variable power,
- at least one advancement module,
- at least one suction module,
- and one programmable blowing module comprising means for the change of the mould,
   providing the finished plant necessary for allowing the chained association with an adjacent module, and in which the movement of the plates is ensured by a pair of independent toothed bands which act perpendicularly and in contraposition touching a circular body of said plates which protrudes above a guide.

In such a way through the notable creative contribution the effect of which means a immediate technical progress, several advantages are achieved. In the first place, the plant consisting of associable modules, it is possible to expand the production capacity of the line if needed. Its modular structure also allows an unequalled simplicity of construction, with minimum installation times and costs. Finally as for the advancing system, it is not only particularly flexible being able to indifferently vary both speed and distance, but also allows an optimization of the bottle moulding process, both as for quantitaty and quality, and in particular allows a constant and uniform heat distribution along the whole preform tract upstream of the blowing station.

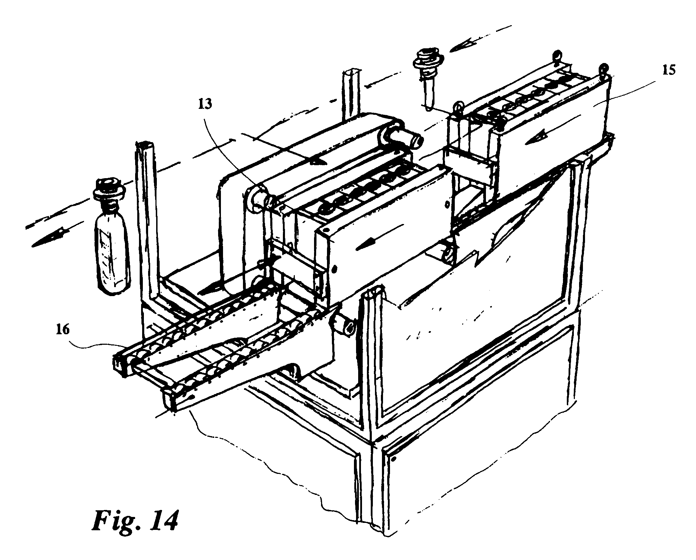

These and other advantages will appear in the following detailed description of a preferred solution with the help of the schematic drawings, the execution details of which are not to be considered limitative but only illustrative.
Figure 1 represents the lay-out plan of some modules taken apart in order to obtain the different configurations of a continuous shaping line for blowing the bottles in PET.
Figure 2 represents a possible basic configuration obtained by means of the serial association of some of the modules of Figure 1.
Figure 3 represents a view of a second possible configuration, expanding the plant of Figure 2 by means of the addition of an intermediate module.
Figure 4 is again a view of a possible configuration, expanding the plant of Figure 3 by means of the addition of a further intermediate module.

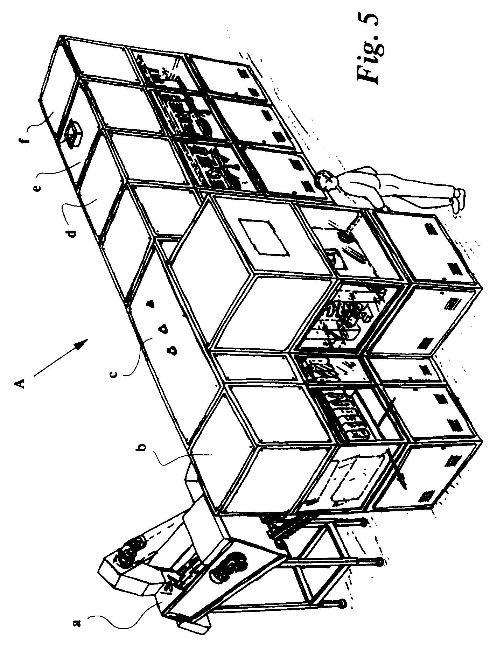

Figure 5 is a perspective view of a continuous line with expandable modules for shaping the bottles.

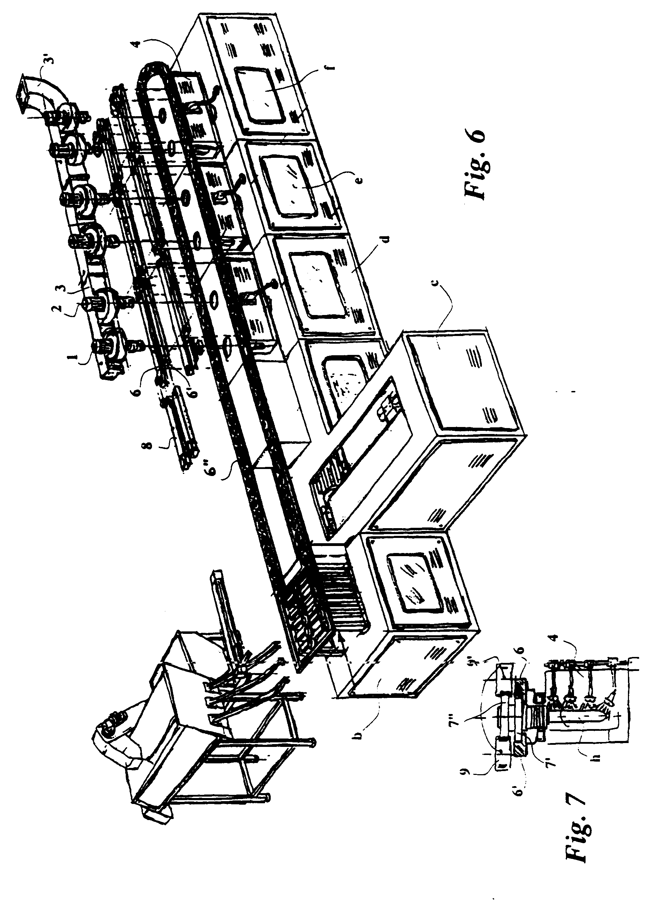

Figure 6 is a partial exploded view of a part of the continuous line with expandable modules for shaping the bottles.
Figure 7 is a detail view, partially in section, of the supporting device, guide and advancement of the submitted preforms to a heating cycle.

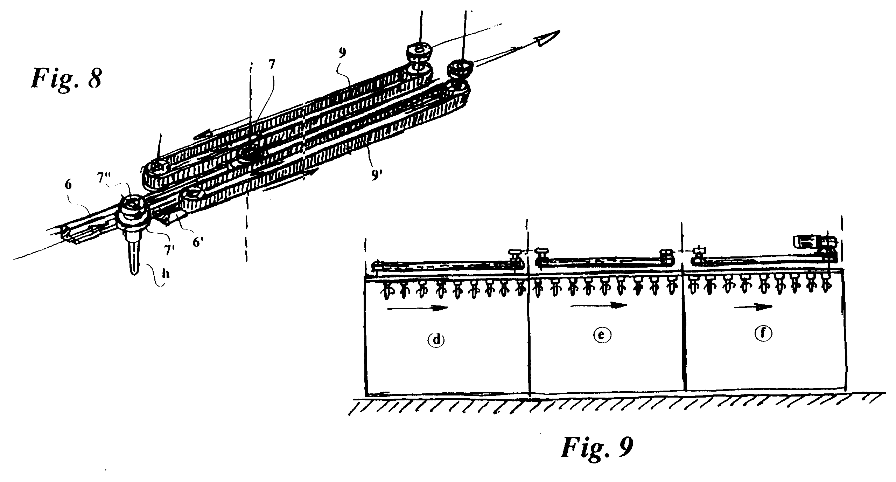

Figure 8 is a perspective view of an advancement module.
Figure 9 is a side-view of a series of advancement modules applied to corresponding underlying heating modules.

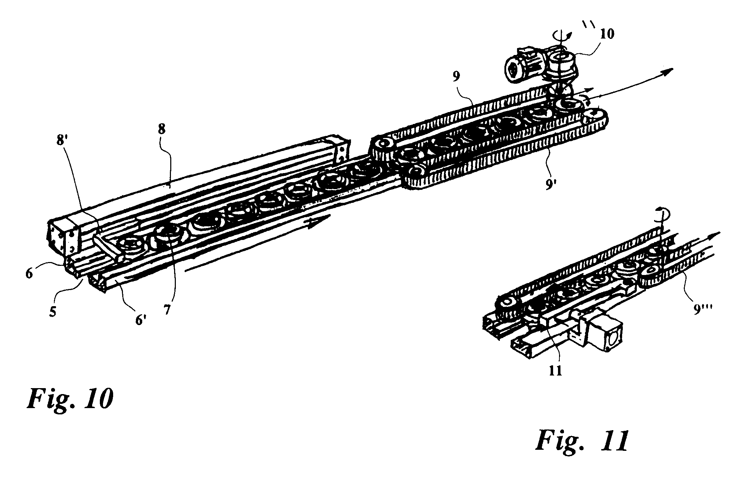

Figure 10 is a perspective view of a first recovery module upstream of with means to forward the plates towards successive advancement means.
Figure 11 represents a perspective view of an acceleration module to feed the blowing station.

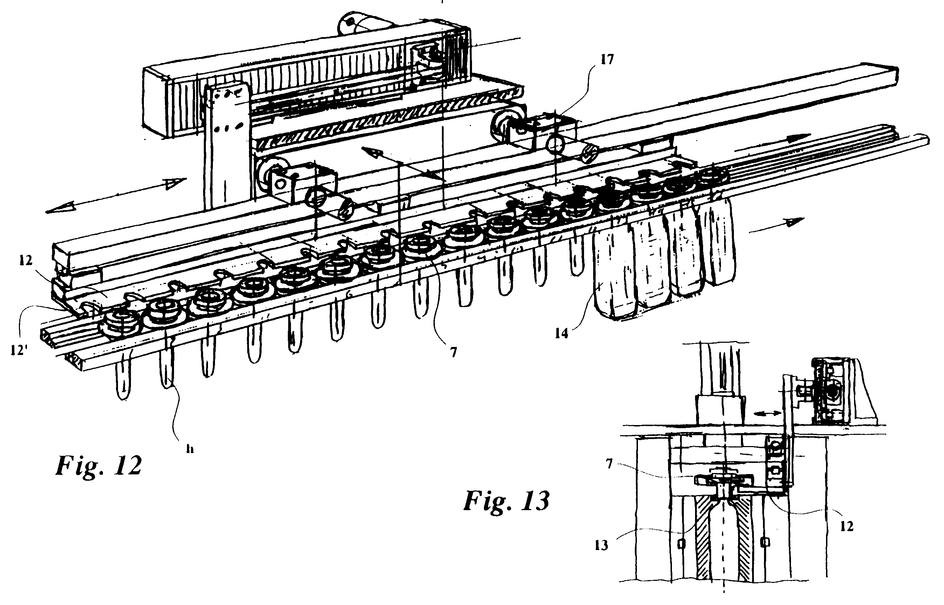

Figure 12 represents a partial perspective view of a plate advancement system in a blowing station.
Figure 13 represents a view in section of the plate advancement under the mould and the evacuation.
Finally, Figure 14 represent a feeder and mould change group for a blowing station.

Referring to the Figures, it is disclosed that a modular plant (A) particularly for continuous blowing processes for shaping containers in plastic material is expandable, comprising essentially several complete plant modules (a, b, c, d, e, f) with autonomous functions, associated contiguously to each other for cooperating according to a logic of continuity for the achievement of an automatic production line. More in detail, the modules are essentially subdivided in basic components and expandable components, that is:
- a module (b) aimed to allow the load of the preforms (h) and the discharge of the bottles, comprising a programmable loading device;
- a module (c) comprising the blowing station, provided with preform advancement means, also programmable and with a movement group for the rapid change of the mould;
- a first module (f) with means for heating the preforms at variable power, and complementary to the same being associable respectively an advancement module with motor delay, and a suction module;
- and finally, with a module (a) consisting of a preform distribution hopper with several tracks, also programmable and upstream elevator means; said modules being considered as basic, and providing:
- an eventual expansion module (d) that includes means of heating at variable power, and complementary to the same as there are associable to it an advancement module and a suction module;
- and at least one successive expansion module (e), analog to the preceding one.

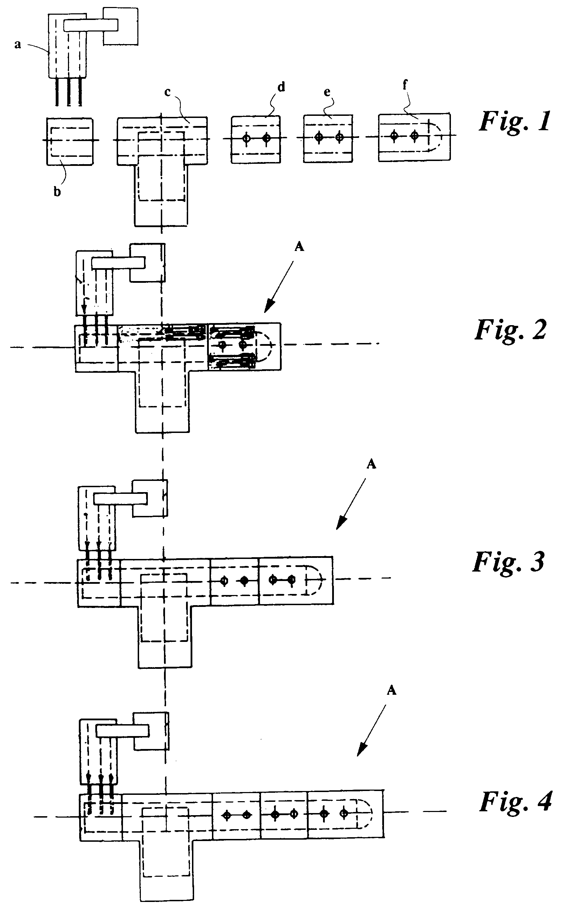

Starting from a first configuration, as illustrated in Figure 2, in which there are essentially four modules for the realization of a continuous bottle shaping line, it is possible to individuate the main modules involved, namely: a hopper (a), a loading and unloading module (b), a blowing station (c), and a module (f) for preheating the preforms with advancement with motor transfer as well as the suction group. In this first configuration, intervening as illustrated in Figures 3. and 4., it is possible to freely expand the production capacity, putting between the blowing station (c) and the transfer module (f) at least one intermediate module (e) and/or (d) with ovens for heating the preforrns at variable power, as well as complementary to the same, an advancement system with means of suction. As for the latter two, any suction module integrable to the underlying modules (e, d, f) comprises at least two suction groups with the respective motor (1 and 2), connected to a corresponding tube portion (3). The association in line of a second, third - and so on - suction module by means of interconnecting flanges on the extremity of the respective tube portions, determines the continuity of the suction system functioning as a collector, until providing an umpteenth head suction module at the collecting line, in which the segment of the collector (3') ends for example in an elbow for the evacuation towards outside, of the vapors and of the heat accumulated inside the heating ovens (4) of each corresponding module.

The support plate advancement system, first for the preforms through said ovens (4) and then for the bottles, at least as for the first ones, is of the complex type, and obviously it is also characterized by being modular, being ensured by a series of reciprocal means connectable one to another, with autonomous motor. More in detail, it has a continuous feeder ring of the blowing station (c) and consists in this case, of three distinct plate movement groups (7). So, following the feeder ring, downstream, a first module, called recovery module, essentially consists of a longitudinal guide (5) that allows the hanging of the preforms (h), disposing parallel a coplanar rail pair (6, 6') with "L"-section, and so much distant that we obtain between the same a longitudinal continuous opening. The particular "L"-section of said rails (6, 6') favours the holding of the plates (7), so that a first disc (7') of these, made of material with low friction degree, rests on both sides with a part of the surface on the so-defined bottom (6''), while the perimetrical edge is disposed in stop or is near to the lateral dock of every rail (6, 6'). Each plate (7) has also a second disc (7'') placed above and integral to the first (7'), which protrudes abundantly in relation to said guide (5).

Along the first section of the feeder ring, the recovery module, comprising also an actuator device (8) disposed laterally, has an engager that is movable longitudinally (8'), the arm of which acts on the last plate of a series already pushed along the guide (5), downstream. The downstream movement of the arm (8') allows the transfer of plates to the successive advancement module, which in this case consists of, besides said support rails, a pair of bands inside and outside of the feeder ring, or toothed belts (9, 9') which are coplanar and parallel but rotate in contraposition. More in detail, the toothed belt (9, 9') has means for favouring the capacity of taking the plate (7), and being spaced the one from the other, touch from both sides the second disc (7''). The composition of each advancement module is logically repeated for successive heating modules (d, e, f), providing in the head module (f) the addition of the motor and of relative adjusting means and control of the speed of said bands. The motion of said toothed belts is independent in relation to at least one of the directions that the belt can carry out both internally and externally, as for the configuration of the feeder ring, and can consequently comprise at least one ratiornotor group (10), in this case with head (f). Moreover the hypothesis is not excluded that any single advancement module can have a motor, in order to to obtain a greater flexibility of the plant by increasing the possibility to vary the advancement speed also for zones only.

Following the ring-shaped feeder line further, in proximity of the blowing module(c) there is a plate advancement speed change zone (7). In practice a rapid transfer of plates (7) and of the softened preforms (h) must be possible, in the direction of the blowing station downstream, so that in this area a brusque acceleration may be imparted to the plates (7). In order to allow such a variation, the device consists of only one towing belt (9, 9'), while the corresponding, opposed and parallel one (9''') ends earlier. The section concerned by the advancement of only one of the bands (9, 9'), is replaced on the opposite side by an abutment guide (11) which is perpendicularly adjustable and, as they advance downstream, acts on the disc (7'') of the corresponding plates (7).

When the plates (7) introduce the preforms (h) inside the blowing station, they are stopped and withdrawn by a mobile comb (12) provided longitudinally of a series of recesses (12') which pitchfork the plates in the area underlying the lower disc (7'). Then the serial mould (13) opens, allowing the advancement and the introduction into the mould (13), by means of said comb (12), of a corresponding series of preforms (h). During the blowing cycle, the comb (12) withdraws, moving back upstream of the line, and takes a second series of preforms (h) to be again introduced into the mould (13), and so on, up to the conclusion of the shaping cycle for blowing the bottles (14), when it evacuates them. For allowing the synchronous movement of the comb (12), if compared to the opening phases and end cap of the mould (13), the transmission axis (17) is mounted on the mobile columns of the mould.

In the proposed solution finally is suggested a mould change system, that basically comprises at least one second serial mould (15), adjacent to a first one (13), placed on the same advancement plane. An interlocking device allows the advancement, in either direction, of the mould that is not requested at the moment (13) for allowing the placement of the new mould coming from the other side (15), to be then withdrawn by means (16) fitting the operative prearrangement.

## Claims

1. A modular plant, particularly for continuous blowing processes for shaping containers in plastic material, using advancing means for respective preforms (h), of the type comprising in downstream direction: a loading station, in which preforms (h) are withdrawn and transferred on plates (7), for being heated inside preforms (h) heating means (4), then introduced into a blowing station and successively evacuated, characterized in that said modular plant is realized in an expandable continuous bottle shaping line, said line being subdivided into modules, namely:
- preforms loading and container discharge module (b),
- at least one module for heating the preforms at variable power (f),
- at least one advancing module (9,9',6,7),
- at least one suction module (1,2,3),
- and one programmable blowing module (c) comprising means for the change of the mould (13) in which preforrns (h) have to be introduced,
providing the finished plant to be able to allow the concatenated association with any adjacent module.

2. A modular plant, according to claim 1., characterized in that said modules are essentially subdivided into basic components and expandable components, namely:
- a module (b), which is to allow the loading of the preforms (h) and the discharge of the bottles, comprising a programmable loading device;
- a module (c) comprising the blowing station, provided of preform advancement means, also programmable and with a movement group for the rapid change of said mould (13);
- a first module (f) with means for heating the preforms (4) at variable power, and complementary to the same being associable respectively an advancement module with transfer motor means (9,9',6,7), and a suction module (1,2,3);
- and finally, providing a module (a) consisting of a preform distribution hopper with several tracks, also programmable, as well as an upstream elevator means;
said modules being considered as basic, because there are provided with:
- an eventual expansion module (d) that comprises heating means at variable power (4), and complementary to the same being associable respectively an advancement module (9,9',6,7) and a suction module (1,2,3);
- and at least one successive expansion module (e), similar to the preceding one (d)

3. A method for supply of respective preforms (h) for a continuous blowing process for shaping containers in plastic material, of the type comprising in downstream direction:
a loading station, in which preforrns (h) are withdrawn and transferred on plates (7), for being carried inside a heating station and then introduced into a blowing station (c) and subsequently evacuated, characterized in that preform (h) support plates (7), by means of reciprocal means interconnectable by modules and aligned to each other, eventually with an autonomous motor means, are transferred from said upstream loading station to a downstream bottle evacuation station (b), passing through said blowing station (c), in which to said plates (7) a rectilinear advancement motion, and/or a rotatory motion on their own axis are simultaneously imparted, said movements being with variable speed.

4. A modular plant according to the preceding claims, characterized in that said modules are connected to each other to realizes a continuous ring feeder of a blowing station (c), providing three distinct plate movement groups (7) in downstream direction:
- a first recovery module, to allow the starting of the loading of plates (7) in the direction of the heating ovens (4) of successive modules (d, e, f),
- at least one intermediate variable speed advancing module (9, 9',6,7) depending on the quantity of heating modules (4),
- and providing a plate accelerator device (7) near to the entry of the blowing station (c), for favouring the rapid supply with preforms (h) of the latter.

5. A modular plant according to claim 4., characterized in that said advancing modules comprise a longitudinal guide (5) that allows the hanging of the preforms (h), obtained disposing parallelly a coplanar pair of rails (6, 6') with "L"-section, which support a first disc (7) integral to the body of the plate (7).

6. A modular plant according to claims 4. and 5., characterized in that each plate also (7) provides integrally a second disc (7) placed above the first (7) which protrudes abundantly over said guide (5).

7. A modular plant according to claims 4., 5. and 6., characterized in that along the first section of the feeder finger ring, the recovery module also comprises an on side actuator device (8), with an engager (8') movable longitudinally, the arm of which acts on the last plate (7) of a series already pushed downstream along the said guide (5).

8. A modular plant according to the preceding claims characterized in that in the feeder ring, an advancing module following the first recovery module, of the expandable type, provides besides said support rails, a pair of internal and external bands, or toothed belts (9, 9') which are coplanar and parallel and rotate in contraposition with different speed one from the other.

9. A modular plant according to the preceding claims characterized in that the said belts (9, 9'), are spaced one from the other, and act on the movement of at least one plate (7), touching by friction both sides of the second disc (7'').

10. A modular plant according to the preceding claims characterized in that the composition of each advancement module is logically repeated for the successive heating modules, (d, e, f), providing in one head module (f) the addition of the motor and of means of adjustment and control of the speed of said belts (9,9').

11. A modular plant according to preceding claims characterized in that the motion of said toothed belts (9,9'), both internal and external, is independent one from the other; while the dependence consists in the confrontations of said belts (9,9') which rotate following a common way of rotation, and comprising at least one ratiomotor group (10) for each hauling line.

12. A modular plant according to the preceding claims, characterized in that near the said blowing module (c) there is a plate (7) advancement speed change zone.

13. A modular plant according to claim 12., characterized in that an acceleration device is provided, said device consisting in only one towing belt (9, 9'), while the corresponding one, opposed and parallel (9''') ends earlier, so that on the opposite side there is an abutment perpendicularly adjustable guide (11), which, as the corresponding plates (7) advance downstream, acts on the respective discs (7'').

14. A modular plant according to preceding claims, characterized in that in the said blowing station (c) here is a movable comb (12) longitudinally provided with a series of recesses (12') which pitchfork the plates (7).

15. A modular plant according to the preceding claims, characterized in that a synchronous movement of the comb (12) is provided, if compared to the opening phases and end cap of said mould (13), and the transmission axis (17) is mounted on movable columns of said mould.

16. A modulator plant according to the preceding claims, characterized in that the plate advancement system (7) in said blowing station (c) provides a movable comb (12), which after having withdrawn upstream a corresponding series of preforrns (h) transfers them into said mould (13), which has opened in the meantime, after that, during the cycle of blowing, the comb (12) withdraws, returning upstream of the line, and takes at least one second series of preforms (h) to be again introduced into said mould (13), up to the conclusion of the shaping cycle for blowing the bottles (14), then proceeding to the evacuation.

17. A modular plant according to the preceding claims, characterized in that a mould change system is provided comprising at least one second serial mould (15), adjacent to a first one (13), placed on the same advancement plane, while an interlocking device allows the advancement in either direction of the mould not required at the moment (13) for allowing the placement of the new mould coming from the other side (15), and so be withdrawn by means (16) suitable to make it operative.

18. A modular plant according to the preceding claims, characterized in that each suction module, is integrable to the underlying modules (e, d, f), and comprises at least two suction groups with the respective motor (1 and 2), connected to a corresponding tube portion (3), as part with a greater collector for the evacuation towards outside of vapors accumulated inside of the heating ovens (4) of each corresponding module (d, e, f).

## Patentansprüche

1. Modulare Anlage, besonders für kontinuierliche Blasverfahren zum Formen von Kunststoffbehältern, unter Verwendung von Vorschubmitteln für betreffende Vorformlinge (h), die stromabwärts umfaßt: eine Ladestation, in welcher die Vorformlinge (h) entnommen und auf Platten (7) übertragen werden, um in Erwärmungsmitteln (4) für die Vorformlingen (h) erwärmt zu werden und daraufhin in eine Blasstation eingeführt und anschließend ausgeleert zu werden, dadurch gekennzeichnet, daß besagte modulare Anlage als expansibles, kontinuierliches Band für die Formgebung von Flaschen ausgeführt ist, besagtes Band wird in Module unterteilt, und zwar:
- ein Modul (b) zur Ladung der Vorformlinge und zur Entladung der Behälter,
- mindestens ein Modul zur Erwärmung der Vorformlinge bei schwankender Energie (f),
- mindestens ein Vorschubmodul (9, 9',6,7),
- mindestens ein Ansaugmodul (1,2,3),
- und ein programmierbares Blasmodul (c), das Mittel zur Veränderung der Form (13) enthält, welche die Vorformlinge (h) erhalten sollen, welche die fertiggestellte Anlage so ausstattet, daß sie in der Lage ist, eine Verbindung mit jedem der angrenzenden Module zu ermöglichen.

2. Modulare Anlage nach Anspruch 1 dadurch gekennzeichnet, daß besagte Module im wesentlichen in grundlegende und expansible Bestandteile unterteilt werden, und zwar:
- ein Modul (b) mit einer programmierbaren Ladevorrichtung, welches die Ladung der Vorformlinge (h) und die Entladung der Flaschen ermöglicht;
- ein Modul (c), das eine Blasstation umfaßt, die mit Fördermittel für Vorformlinge, auch programmierbar, und einer Transportgruppe zur schnellen Änderung der besagten Form (13) ausgestattet ist;
- ein erstes Modul (f) mit Mitteln zur Erwärmung der Vorformlinge (4) bei schwankender Energie, komplementär dazu kann entsprechend ein Vorschubmodul mit Transferantriebmitteln (9, 9', 6, 7) und einem Ansaugmodul (1,2,3) angeschlossen werden;
- und schließlich wird ein Modul (a) vorgesehen, das aus einem Trichter zur Verteilung der Vorformlinge mit mehreren Bahnen, auch programmierbar, sowie stromaufwärts aus einem Hebemittel besteht;
besagte Module werden als grundlegend betrachtet, denn sie sind ausgestattet mit:
- einem eventuellen Expansionsmodul (d) mit Erwärmungsmittel für schwankende Energie (4), komplementär dazu kann ein Vorschubmodul( 9, 9', 6, 7) und ein Ansaugmodul (1,2,3) angeschlossen sein;
- und mindestens einem darauffolgenden Ausdehnungsmodul (e), ähnlich dem vorausgehenden (d).

3. Methode für die Zufuhr von betreffenden Vorformlingen (h) in einem kontinuierlichen Blasverfahren zum Formen von Kunststoffbehältern, die stromabwärts umfaßt:
eine Ladestation, in welcher die Vorformlinge (h) entnommen und auf Platten (7) übertragen werden, um in eine Erwärmungsstation gebracht, dann in eine Blasstation (c) eingeführt und später ausgeleert zu werden, dadurch gekennzeichnet, daß die Trägerplatten (7) für den Vorformling (h) durch reziproke Mittel über Module zusammenschaltbar und aufeinander ausrichtet ist, und eventuell mit einem autonomen Antriebsmittel von besagter stromaufwärts ladender Station zu einer stromabwärts entleerenden Station (b) für Flaschen gebracht werden, durch besagte Blasstation (c) gehend, in welcher eine geradlinige Vorschubbewegung zu besagten Platten (7) und/oder eine Drehbewegung auf ihrer eigenen Achse gleichzeitig übertragen werden, besagte Bewegungen mit wechselnder Geschwindigkeit.

4. Modulare Anlage nach einem der vorhergehenden Ansprüche dadurch gekennzeichnet, daß besagte Module miteinander verbunden sind, um so einen kontinuierlichen Ringversorger einer Blasenstation (c) zu bilden, indem man drei verschiedene Plattentransportgruppen (7) stromabwärts vorsieht:
- ein erstes Rückgewinnungsmodul, um den Ladebeginn der Platten (7) in Richtung der Erwärmungsöfen (4) der darauffolgenden Module (d, e, f) zu ermöglichen,
- mindestens ein Zwischenvorschubmodul (9, 9', 6, 7) mit veränderlicher Geschwindigkeit abhängig von der Menge der Erwärmungsmodule (4),
- und es wird eine Plattenbeschleunigungsvorrichtung (7) nahe dein Eintritt der Blasstation (c) vorgesehen, um die schnelle Zufuhr der Vorformlingen (h) von der letzten zu ermöglichen.

5. Modulare Anlage nach Anspruch 4 dadurch gekennzeichnet, daß besagte Vorschubmodule eine Längsführung (5) aufweisen, die das Aufhängen der Vorformlinge (h) ermöglicht und die durch parallele Anordnung eines koplanaren Schienenpaares (6, 6) mit einem "L" -Abschnitt erhalten wird, welcher eine erste Scheibe (7) vollständig zum Körper der Platte (7) stützt.

6. Modulare Anlage nach Anspruch 4 und 5 dadurch gekennzeichnet, daß jede Platte (7) fest eingebaut eine zweite Scheibe (7) auf der ersten (7) plaziert vorsieht, welche reichlich über besagter Führung (5) vorsteht.

7. Modulare Anlage nach Anspruch 4, 5 und 6 dadurch gekennzeichnet, daß das Rückgewinnungsmodul entlang des ersten Abschnitts des Versorgerrings auch eine seitliche Antriebsvorrichtung (8) umfaßt, mit einem längs beweglichen Eingriff (8'), dessen Arm auf die letzte Platte (7) einer schon stromabwärts entlang besagter Führung (5) geschobener Reihe wirkt.

8. Modulare Anlage nach einem der vorhergehenden Ansprüche dadurch gekennzeichnet, daß ein Vorschubmodul, das auf das erste expansible Rückgewinnungsmodul folgt, in dem Versorgerring ein Paar innerer und äußerer Bänder oder Zahnriemen(9, 9') neben besagter Stützschienen vorsieht, die koplanar und parallel sind und in Gegenüberstellung mit unterschiedlicher Geschwindigkeit rotieren.

9. Modulare Anlage nach einem der vorhergehenden Ansprüche dadurch gekennzeichnet, daß besagte Bänder (9, 9') voneinander getrennt werden, auf die Bewegung von mindestens einer Platte (7) wirken und durch Reibung beide Seiten der zweiten Scheibe (7'') berühren.

10. Modulare Anlage nach einem der vorhergehenden Ansprüche dadurch gekennzeichnet, daß die Zusammensetzung des Fördermoduls logisch für die darauffolgenden Erwärmungsmodule (d, e, f) wiederholt wird, und daß in einem Hauptmodul (f) der Zusatz für den Motor und ein Mittel zur Einstellung und Kontrolle der Geschwindigkeit der besagten Bändern (9,9') vorgesehen wird.

11. Modulare Anlage nach einem der vorhergehenden Ansprüche dadurch gekennzeichnet, daß die Bewegung der besagten Zahnriemen (9,9'), sowohl innen als auch außen, unabhängig voneinander ist; während eine Abhängigkeit in der Gegenüberstellung der besagten Bänder (9,9') besteht, die einer gemeinsame Rotationbahn folgend rotieren, und die mindestens eine Getriebemotorgruppe (10) für jede Zuglinie aufweist.

12. Modulare Anlage nach einem der vorhergehenden Ansprüche dadurch gekennzeichnet, daß nahe des besagten Blasmoduls (c) ein Bereich für die Änderung der Fördergeschwindigkeit der Platte (7) vorgesehen wird.

13. Modulare Anlage nach Anspruch 12 dadurch gekennzeichnet, daß eine Beschleunigungsvorrichtung vorgesehen wird, besagte Vorrichtung besteht aus nur einem Zugband (9, 9'), während das entsprechende (9'''), entgegengesetzt und parallel, früher endet, so daß auf der gegenüberliegende Seite eine senkrecht regulierbare Stützführung (11) entsteht, die, da die entsprechenden Platten (7) stromabwärts vorrücken, auf die betreffenden Scheiben (7'') wirkt.

14. Modulare Anlage nach einem der vorhergehenden Ansprüche dadurch gekennzeichnet, daß in der besagten Blasstation (c) ein beweglicher Kamm (12) vorgesehen wird, der längs mit einer Reihe von Vertiefungen (12') versehen ist, welche die Platten (7) aufnehmen.

15. Modulare Anlage nach einem der vorhergehenden Ansprüche dadurch gekennzeichnet, daß, verglichen mit den Öffnungs- und Schließphasen der besagten Form (13), eine synchrone Bewegung des Kamms (12) vorgesehen wird, und daß die Antriebsachse (17) auf bewegliche Säulen der besagten Form montiert wird.

16. Modulare Anlage nach einem der vorhergehenden Ansprüche dadurch gekennzeichnet, daß das Plattenfördersystem (7) in besagter Blasstation (c) einen beweglichen Kamm (12) vorsieht, welcher, nachdem er stromaufwärts eine entsprechende Vorformlingreihe (h) entnommen hat, diese in die besagte Form (13) überträgt, die sich unterdessen geöffnet hat, und daß sich der Kamm (12) während des Blaszyklus zurückzieht, sich stromaufwärts der Linie zurückbegibt, und es mindestens eine zweite Reihe von Vorformlingen (h) erfordert, um, bis zum Ende des formgebenden Zyklus für das Blasen der Flaschen (14), wieder sie in die besagte Form (13) zu bringen, danach erfolgt die Entleerung.

17. Modulare Anlage nach einem der vorhergehenden Ansprüche dadurch gekennzeichnet, daß ein Formveränderungssystem mit mindestens einer zweiten Form (15) vorgesehen wird, an der ersten (13) angrenzend und auf derselben Förderungsebene plaziert, während eine Verriegelungsvorrichtung die Förderung in beide Richtungen der Form erlaubt, im Augenblick nicht erforderlich (13), um so das Plazieren der neuen Form, die von der anderen Seite (15) kommt, zu ermöglichen und durch Mittel (16), die geeignet sind, die Form betriebsfähig zu machen, entnommen zu werden.

18. Modulare Anlage nach einem der vorhergehenden Ansprüche dadurch gekennzeichnet, daß jedes Ansaugmodul in die darunterliegenden Module (e, d, f) integrierbar ist, und mindestens zwei Ansauggruppen mit einem entsprechenden Motor (1 und 2) aufweist, verbunden mit einem entsprechenden Tubenteilstück (3), teilweise mit einem größeren Sammler, um sie nach außen von den Dämpfen, die sich innerhalb der Erwärmungsöfen (4) jedes entsprechenden Moduls (d, e, f) angesammelt haben, zu entleeren.

## Revendications

1. Une installation modulaire spécialement destinée à l'élaboration de récipients en plastique par des procédés de soufflage continu, et comportant des techniques avancées pour les préformes respectives (h). Cette installation comprend une étape de chargement en aval, dans laquelle les préformes (h) sont retirées et transférées sur des plateaux (7), pour être chauffées dans des moules (h) par l'utilisation de chaleur (4), puis introduites dans une station de soufflage et enfin évacuées, caractérisée en ce qu'elle comprend une chaîne continue et expansible de moulage de bouteilles, cette chaîne étant subdivisée en modules, comprenant:
- un chargement de préformes et module de déchargement de récipients (b),
- d'au moins un module variable pour chauffer les préformes (f),
- d'au moins un module roulant (9, 9',6,7),
- d'au moins un module d'aspiration (1,2,3),
- et d'un module de soufflage programmable (c) comportant des moyens pour la transformation des moules (13) et dans lequel les préformes (h) doivent être introduites,
permettant l'installation complète d'être capable d'associer en chaîne les modules adjacents.

2. Une installation modulaire, selon la revendication 1., caractérisée en ce que les dits modules sont essentiellement subdivisés en composants de base et en composants expansibles,
c'est-à-dire:
- un module (b), qui permet le chargement des préformes (h) et le déchargement des bouteilles, comprenant un dispositif de chargement programmable;
- un module (c) comprenant la station de soufflage, comportant des moyens perfectionnés de moulage, également programmable et avec un mouvement en chaîne pour le changement rapide du dit moule (13);
- un premier module (f) comportant des moyens de chauffage de préformes (4) de puissance variable, complémentaire au module et étant aussi associable à un module de déplacement muni d'un moteur de transfère (9, 9',6,7), et un module de soufflage (1,2,3);
- et enfin, pourvoyant un module (a) qui consiste en un trémie de distribution des préformes constitué de plusieurs étapes, également programmable, ainsi que d'un moyen d'élévation en amont; les dits modules sont considérés fondamentaux, parce que ils sont pourvus de:
- un module d'expansion éventuelle (d) qui comprend des moyens chauffant à puissance variable (4), complémentaire et associable au module déplacement (9, 9',6,7) et un module d'aspiration (1,2,3);
- et d'au moins un module d'expansion successive (e), similaire au précédant (d)

3. Une méthode pour l'approvisionnement des préformes respectives (h) pour un procédé de soufflage continue pour donner forme aux récipients de matériel plastique, du type compris dans la direction en aval:
une station de chargement, dans laquelle les préformes (h) sont retirées et transférées sur des plaques (7), pour être déposées dans une station de chauffage et ensuite introduites dans une station de soufflage (c) et ultérieurement évacuées, et qui a pour caractéristique que les préformes (h) de la plaque de support (7), par le biais de moyens réciproquement interconnectables à l'aide de modules et centrés les uns par rapport aux autres, éventuellement par l'utilisation d'un moteur autonome, sont transférés de la dite station de chargement en amont à une station d'évacuation de verre en aval (b), en passant par la dite station de soufflage (c), dans laquelle les dites plaques (7) un mouvement de déplacement rectiligne, et/ou un mouvement rotatoire sur leur propre axe qui communique simultanément, les dits mouvements pouvant s'effectuer à vitesse variables.

4. Un équipement modulaire selon les revendications précédantes, qui est caractérisé en ce que les dits modules sont connectés les uns avec les autres pour réaliser un alimentateur en anneaux continu d'une station de soufflage (c), pourvoyant trois groupes différents de mouvements de plaque (7) dans une direction en avale:
- un premier module de récupération, pour permettre le commencement du chargement des plaques (7) en direction des fours de chauffage (4) des successifs modules (d, e, f),
- au moins une vitesse variable intermédiaire de déplacement des modules (9, 9', 6,7) selon la quantité des modules de chauffage (4),
- et pourvoyant un dispositif d'accélérateur de plaques (7) proche de l'entrée de la station de soufflage (c), pour favoriser l'approvisionnement rapide des préformes (h) du dernier.

5. Un équipement modulaire selon la revendication 4., caractérisé en ce que les modules dits de déplacement comprennent un guide longitudinal (5) qui permet la suspension des préformes (h), obtenu par la disposition parallèle d'une paire coplanaire de rails (6, 6') avec des sections en "L", lesquelles supportent un premier disque (7) intégral à la partie centrale de la plaque (7).

6. Un équipement modulaire conforme aux revendications 4. et 5., caractérisé en ce que chacune des plaques est également (7) pourvue d'un deuxième disque (7) placé au-dessus du premier (7) lequel surpasse largement le dit guide (5).

7. Un équipement modulaire conforme aux revendications 4., 5. et 6., caractérisé en ce que tout au long de la première section de la tige de l'alimentateur à anneaux, le module de récupération également comprend également d'un surdispositif qui agit à côté (8), avec un engrenage (8') longitudinalement mobile, le bras duquel actant sur la dernière plaque (7) d'une série déjà déplacée en aval tout au long du dit guide (5).

8. Un équipement modulaire conforme aux revendications précédantes caractérisé en ce que dans l'alimentateur à anneaux, un module roulant suivant le premier module de récupération, de type expansible, pourvu entre autre du dit support de rails, une paire de bandes internes et externes, ou de ceintures dentées (9, 9') qui sont coplanaires, parallèles et qui tournent en position inverse tout deux à différentes vitesses.

9. Un équipement modulaire conforme aux revendications précédantes caractérisé en ce que les dites ceintures (9, 9'), sont distanciées les unes des autres, et agissent sur le mouvement d'au moins une plaque (7), touchant par la friction les deux côtés du deuxième disque (7'')

10. Un équipement modulaire conforme aux revendications précédantes et caractérisé en ce que la composition de chaque module de déplacement est logiquement répétée pour celle des modules successifs de chauffage successifs, (d, e, f), pourvoyant dans un module en tête (f) l'addition du moteur et des moyens de correction et contrôle de la vitesse des dites ceintures (9,9').

11. Un équipement modulaire conforme aux revendications précédantes et caractérisé en ce que le mouvement des dites ceintures dentées (9,9'), interne et externe, sont indépendantes l'une de l'autre; tandis que la dépendance consiste aux confrontations des dites ceintures (9,9') lesquelles tournent d'une façon commune de rotation, et comprenant au moins un groupe de moteur de engrenage (10) pour chaque câble de halage.

12. Un équipement modulaire conforme aux revendications précédantes, caractérisé en ce que près du dit module de soufflage (c) il y a une zone de changement de vitesse de déplacement de la plaque (7).

13. Un équipement modulaire selon la revendication 12., caractérisé en ce qu'il est pourvu d'un dispositif d'accélération, le dit dispositif consistant en une seule ceinture de remorquage (9, 9'), tandis que le correspondant, opposé et parallèle (9''') termine plus tôt, afin qu'il y aie un guide d'aboutissement perpendiculairement ajustable du côté opposé (11), lequel, comme les plaques correspondantes (7) avancé en aval, agissant sur les disques respectifs (7'').

14. Un équipement modulaire conforme aux revendications précédantes, caractérisé en ce que dans la dite station de soufflage (c) il y a un peigne mobile (12) longitudinalement pourvu d'une série de cavités (12') qui enchaînent les plaques (7).

15. Un équipement modulaire conforme aux revendications précédantes, caractérisé en ce qu'il est pourvu d'un mouvement synchrone du peigne (12), comparé à celui des phases préliminaires et à celui de la dernière formation de couche du dit moule (13), et l'axe de transmission (17) est monté sur les colonnes mobiles du dit moule.

16. Un équipement modulaire conforme aux revendications précédantes, caractérisé en ce que le système de déplacement des plaques (7) dans la dite station de soufflage (c) pourvu d'un peigne mobile (12), qui après avoir retiré en amont les séries correspondantes de préformes (h) les transfère au dit moule (13), qui s'est ouvert dans un temps moyen, après quoi, pendant le cycle de soufflage, le peigne (12) retire, retournant en amont de la chaîne, et prenant au moins une deuxième série de préformes (h) pour être à nouveau introduit dans le dit moule (13), prêt pour la conclusion du cycle de modelage de soufflage de bouteilles (14), et procédant alors à son évacuation.

17. Un équipement modulaire conforme aux revendications précédantes, caractérisé en ce d'être pourvu d'un système de changement de moules comprenant au moins une deuxième série de moules (15), adjacent à une première série (13), et placé sur le même plan de déplacement, tandis qu'un dispositif entrecroisé permet le déplacement dans l'une ou l'autre direction du moule qui n'est pas nécessaire à ce moment (13) pour permettre le placement du nouveau moule de différente provenance (15), et être ainsi retiré par des moyens (16) appropriés pour le faire opératif.

18. Un équipement modulaire conforme aux revendications précédantes, caractérisé en ce que tous les module d'aspiration, qui sont intégrables aux modules sous-jacents (e, d, f), et qui comprennent de deux groupes de soufflage tous deux dotés de leur moteur (1 and 2), et connectés à la partie de tuyau correspondante (3), avec un plus grand collecteur pour l'évacuation de vapeurs accumulée dans les fours (4) de chaque module correspondant (d, e, f).
